# DEMANDE DE BREVET EUROPEEN

(11) **EP 4 726 941 A2**
(43) Date de publication de la demande: **15.04.2026**
(21) Numéro de dépôt: 25208610.3
(22) Date de dépôt: 14.10.2025
(51) Int. Cl.: H02G 3/32, F16L 3/22, F16B 2/22

(54) **CLIP DE MAINTIEN MULTIFONCTION ET SUPPORT ASSOCIÉ**

(30) Priorité: 14.10.2024 FR 2411086
(71) Demandeur: Nexans, 92400 Courbevoie (FR)
(72) Inventeur: DEMULE, Christophe, 92400 Courbevoie (FR); DELWAL, Fabien, 92400 Courbevoie (FR); TRAN, Victor, 92400 Courbevoie (FR)
(74) Mandataire: Cabinet Boettcher

(57) **Abrégé**

Ce clip (10) de maintien multifonction comporte : une paire de gorges (16, 18) adaptée à retenir deux spires (12, 14) adjacentes d'un même élément enroulable ou à maintenir un ou deux objets au moins partiellement cylindriques, la section transversale de la paire de gorges (16, 18) formant un oméga dont la branche centrale est commune aux deux gorges de la paire de gorges (16, 18) ; et une gorge (19) en C dont l'ouverture est à l'opposé de l'ouverture de la paire de gorges (16, 18), les gorges de la paire de gorges (16, 18) et la gorge (19) en C étant adaptées à se clipser sur un support et la gorge (19) en C étant en outre adaptée à s'emboîter de façon coaxiale dans une gorge de la paire de gorges (16, 18) d'un autre clip (10) identique.

## Description

La présente invention se rapporte à un clip de maintien multifonction à un support associé.

L'une des fonctions de ce clip de maintien est de retenir deux spires d'un même élément enroulable. L'invention sera décrite ici dans un exemple particulier où l'élément enroulable est un câble électrique. Toutefois, cet exemple n'est pas limitatif, l'élément enroulable pouvant aussi bien être un câble non électrique, un tuyau ou encore une corde.

Les couronnes de câbles électriques sont parfois conditionnées dans un emballage de plastique fin appelé « wrap ». Ces emballages permettent à la couronne d'être maintenue pendant toute sa durée d'utilisation, y compris lorsqu'elle est stockée.

Néanmoins, dans certains cas, les couronnes ne sont pas emballées dans un wrap, ni même dans une boîte en carton qui permettrait également de maintenir le câble. En effet, les déchets d'emballage étant voués à être réduits au maximum, il est à prévoir que la plupart des couronnes seront emballées par de simples liens ou d'autres moyens minimalistes.

Par ailleurs, dans le cas de l'utilisation de certains dérouleurs de couronnes, les couronnes sont nues, sans aucun emballage ni lien.

Ainsi, dans de nombreux cas, le maintien de l'extrémité libre du câble de la couronne ne peut actuellement être assuré que par l'utilisation d'adhésif pour associer l'extrémité libre du câble à la couronne elle-même, afin d'éviter un déroulage intempestif qui compliquerait le stockage et l'utilisation ultérieure de la couronne et qui risquerait de dégrader le câble ainsi déroulé.

Il existe donc un besoin d'une solution de maintien de l'extrémité libre du câble d'une couronne, qui permette notamment de s'affranchir de l'utilisation d'adhésif, ce dernier étant jetable, donc non durable et étant difficile à mettre en œuvre.

La présente invention a pour but de répondre à ce besoin et de remédier aux inconvénients précités de l'art antérieur.

Dans ce but, la présente invention propose un clip de maintien multifonction, remarquable en ce qu'il comporte :
une paire de gorges adaptée à retenir deux spires adjacentes d'un même élément enroulable ou à maintenir un ou deux objets au moins partiellement cylindriques, la section transversale de la paire de gorges formant un oméga dont la branche centrale est commune aux deux gorges de la paire de gorges ; et
une gorge en C dont l'ouverture est à l'opposé de l'ouverture de la paire de gorges, les gorges de la paire de gorges et la gorge en C étant adaptées à se clipser sur un support et la gorge en C étant en outre adaptée à s'emboîter de façon coaxiale dans une gorge de la paire de gorges d'un autre clip identique.

L'invention permet, grâce à la paire de gorges en oméga, de solidariser l'extrémité libre du câble de la couronne à une spire de câble adjacente et grâce à la gorge en C et aux deux gorges de l'oméga, de stocker le clip sur une multitude de supports et d'assembler entre eux des clips identiques, ce clip multifonction étant en outre apte à maintenir jusqu'à deux objets au moins partiellement cylindriques dans la paire de gorges. Ce clip présente de nombreux avantages : il est facile et rapide à mettre en place, réutilisable, ne se perd pas facilement, est robuste de par sa configuration et est facile à stocker sur de nombreux supports différents.

En outre, le clip conforme à l'invention peut être décliné en deux tailles permettant de couvrir toutes les sections de câbles les plus courantes, comme par exemple les R2V 3G, 4G, 5G de section 1,5 mm² et 2,5 mm² et leurs équivalents, soit des câbles de section 8 à 10 mm pour l'une des tailles de clip et 10 à 12 mm pour l'autre taille.

Dans un mode particulier de réalisation, la surface interne des deux gorges de la paire de gorges est dotée d'ondulations.

Cela permet d'accrocher le clip solidement sur l'élément enroulable sans détériorer ce dernier, les ondulations offrant un contact en douceur avec l'élément enroulable. En outre, les ondulations améliorent la souplesse du clip, ce qui augmente son adaptabilité aux différentes sections d'éléments enroulables.

Dans un mode particulier de réalisation, le clip est réalisé dans une matière polymérique.

Cela permet d'avoir le choix entre de multiples matières à la fois robustes et suffisamment souples pour permettre les opérations d'insertion de l'élément enroulable dans la paire de gorges en oméga et de clipsage du clip sur un support avec un minimum d'efforts.

Dans un mode particulier de réalisation, la matière polymérique est biosourcée.

Dans un mode particulier de réalisation, la matière polymérique est biodégradable.

Chacune des deux caractéristiques particulières possibles qui précèdent permet de réduire l'impact environnemental du clip.

Dans un mode particulier de réalisation, le clip comporte un élément différenciant selon la taille du clip.

Cela permet à l'utilisateur de savoir instantanément à quelles dimensions de sections d'élément enroulable le clip est adapté.

Dans un mode particulier de réalisation, cet élément différenciant est la couleur du clip.

Lorsque l'élément enroulable est un câble électrique, cela permet d'assortir la couleur du clip à la codification couleur connue des électriciens pour les différentes sections de câbles.

Dans un mode particulier de réalisation, l'élément différenciant est une empreinte de forme spécifique ménagée dans la matière du clip.

Cela permet à l'utilisateur de savoir instantanément à quelles dimensions de sections d'élément enroulable le clip est adapté, même lorsque l'élément enroulable n'est pas un câble électrique et qu'il n'existe pas de codification couleur officielle pour cet élément enroulable.

Dans le même but que celui indiqué plus haut, la présente invention propose également un support de clip, remarquable en ce qu'il est adapté à la fixation d'au moins un clip tel que succinctement décrit ci-dessus, par clipsage de la gorge en C.

Dans un mode particulier de réalisation, le support de clip comporte au moins un emplacement de fixation de la gorge en C.

Cela permet de stocker simultanément plusieurs clips.

Dans un mode particulier de réalisation, le support de clip comporte, sur une première face, une barrette cylindrique présentant une première pluralité d'emplacements de fixation de la gorge en C et, sur une seconde face opposée à la première face, une pluralité de tiges cylindriques d'axes perpendiculaires à l'axe de la barrette et constituant une seconde pluralité d'emplacements de fixation de la gorge en C.

Cela permet d'accroître l'espace de stockage de clips.

Dans un mode particulier de réalisation, le support de clip comporte une platine équipée de vis de fixation, adaptée à la fixation du support de clip sur un support de touret.

Cela permet à l'utilisateur d'un touret d'avoir à portée de main des clips de maintien de l'élément enroulé sur le touret sans risque de perdre ces clips et d'avoir également à portée de main jusqu'à deux objets au moins partiellement cylindriques comme un stylo à bille, un marqueur ou un petit outil, maintenus dans chaque clip.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig.1] est une vue d'un clip de maintien multifonction conforme à la présente invention utilisé pour retenir deux spires adjacentes d'un câble électrique, dans un mode particulier de réalisation.
[Fig.2] est une vue d'un assemblage de plusieurs clips de maintien conformes à la présente invention, dans un mode particulier de réalisation.
[Fig.3] est une vue d'un mode particulier de réalisation de clips conformes à la présente invention montrant un détail de réalisation.
[Fig.4] est une vue d'un mode particulier de réalisation d'un support de clip conforme à la présente invention.
[Fig.5] est une vue des faces avant et arrière d'un support de touret sur lequel est monté un support de clip conforme à la présente invention, dans un mode particulier de réalisation.
[Fig.6] est une vue d'un support de clip conforme à la présente invention monté sur un support de touret et sur lequel sont clipsés plusieurs clips conformes à la présente invention, dans un mode particulier de réalisation.
[Fig.7] est une vue d'un support de clip conforme à la présente invention monté sur un support de touret et sur lequel sont clipsés plusieurs clips conformes à la présente invention, un marqueur étant clipsé sur ces clips.

### Description de mode(s) de réalisation

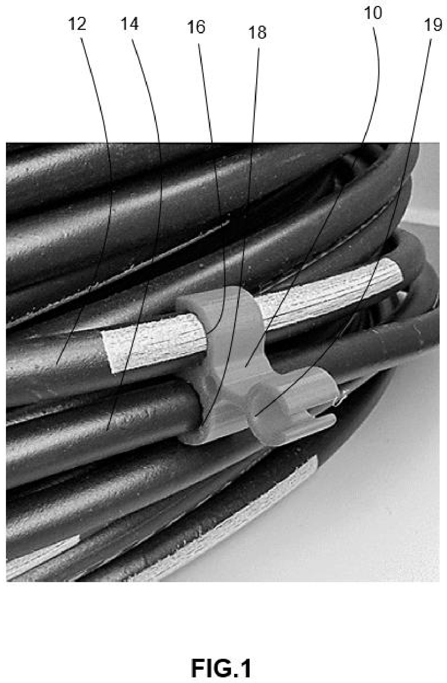

La [Fig.1] illustre un mode particulier de réalisation d'un clip 10 de maintien multifonction conforme à la présente invention. Le clip 10 est représenté en position installée sur un élément enroulable constitué, dans cet exemple non limitatif, par un câble électrique, qui est enroulé sous forme d'une couronne de câble.

Une première fonction du clip 10 est de retenir deux spires 12, 14 adjacentes faisant partie du même élément enroulable, ici le câble.

A cet effet, le clip 10 comporte une paire de gorges 16, 18 ayant une section transversale formant un oméga, adaptée à retenir ces deux spires 12, 14. La branche centrale de l'oméga est commune aux deux gorges de la paire de gorges 16, 18.

Une deuxième fonction du clip 10 est, en lieu et place de retenir les deux spires 12, 14, de maintenir un ou deux objets au moins partiellement cylindriques, à savoir un objet au moins partiellement cylindrique dans chacune des deux gorges de la paire de gorges 16, 18, le diamètre de la partie cylindrique de l'objet étant égal ou légèrement supérieur au diamètre intérieur de chaque gorge. Cet objet peut par exemple être un stylo à bille, un marqueur (tel qu'un feutre ou marqueur spécialement conçu pour l'inscription sur câble électrique), ou encore un petit outil.

Le clip 10 comporte en outre une gorge 19 en C, dont l'ouverture est à l'opposé de l'ouverture de la paire de gorges 16, 18.

Une troisième fonction du clip 10 consiste en ce que les gorges de la paire de gorges 16, 18 et la gorge 19 en C sont adaptées à se clipser sur un support, comme décrit plus en détail ci-après.

Par ailleurs, la partie du clip 10 où se trouve la gorge 19 en C peut avantageusement servir de moyen de préhension du clip 10, ce qui permet par exemple de positionner facilement le clip 10 sur deux spires adjacentes de l'élément enroulable et de libérer aisément ces spires en tenant d'une main le clip 10 par la gorge 19 en C et en dégageant de l'autre main l'élément enroulable.

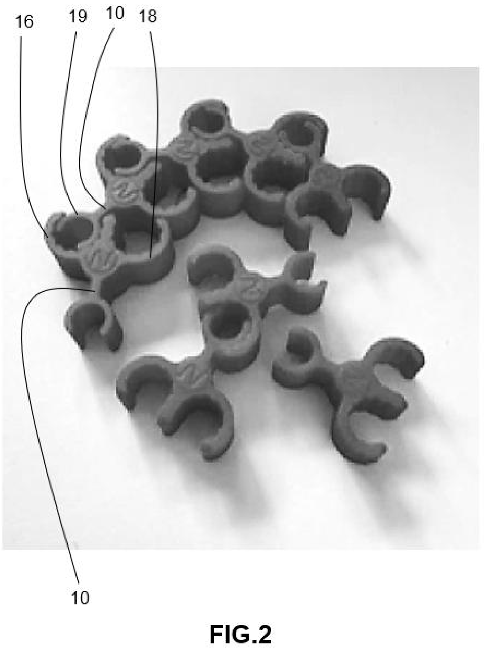

Comme le montre la [Fig.2], une quatrième fonction du clip 10 consiste en ce que la gorge 19 en C est en outre adaptée à s'emboîter de façon coaxiale dans une gorge de la paire de gorges 16, 18 d'un autre clip 10 identique.

A cet effet, le diamètre extérieur de la gorge 19 en C est approximativement égal au diamètre intérieur d'une gorge de la paire de gorges 16, 18 en oméga. Ainsi, tout clip 10 peut s'insérer dans un clip 10 identique par emboîtement de sa gorge 19 en C dans l'une des gorges de la paire de gorges 16, 18 de l'autre clip 10 en positionnant la gorge 19 en C coaxialement à la gorge réceptrice de la paire de gorges 16, 18. La [Fig.2] montre l'emboîtement successif de cinq clips 10 par emboîtement de la gorge 19 en C des second, troisième, quatrième et cinquième clips respectivement dans la gorge 16 des premier, deuxième, troisième et quatrième clips. Plusieurs clips 10 peuvent ainsi être stockés sous forme d'un assemblage de plus grande taille, donc plus visible et par conséquent plus difficile à perdre.

La surface interne des deux gorges de la paire de gorges 16, 18 en oméga peut être dotée d'ondulations, de façon à permettre à la fois une amélioration de la souplesse du clip 10 et son accrochage en douceur sur l'élément enroulable ou sur la gorge 19 en C d'un autre clip 10, sans les détériorer.

Par ailleurs, le clip 10 peut être réalisé dans une matière non cassante, comme par exemple une matière polymérique, par exemple le polypropylène (PP), le polyéthylène (PE), l'acrylonitrile butadiène styrène (ABS), ou encore le polytéréphtalate d'éthylène (PET), ces exemples n'étant pas limitatifs.

La matière polymérique du clip 10 peut être biosourcée (certains PE peuvent par exemple être issus de la canne à sucre) et/ou biodégradable et/ou recyclée, ce fait du clip 10 un objet durable.

Dans un mode particulier de réalisation où l'élément enroulable est un câble électrique, le clip 10 peut être décliné en deux versions interopérables pour couvrir toutes les sections de câble les plus courantes comme par exemple les R2V 3G, 4G, 5G 1,5 mm² et 2,5 mm² et leurs équivalents, soit des sections de 8 à 10 mm pour les premiers et de 10 à 12 mm pour les seconds. Pour faciliter l'identification de la taille du clip 10 par l'utilisateur, le clip 10 peut comporter un élément différenciant selon sa taille.

Cet élément différenciant peut par exemple être la couleur du clip 10. En matière de câbles électriques, il existe des couleurs normalisées connues des électriciens et correspondant aux sections des câbles : par exemple, le rose pour 1,5 mm² et le jaune pour 2,5 mm². On peut donc prévoir la même couleur pour les clips 10 respectivement adaptés à ces sections.

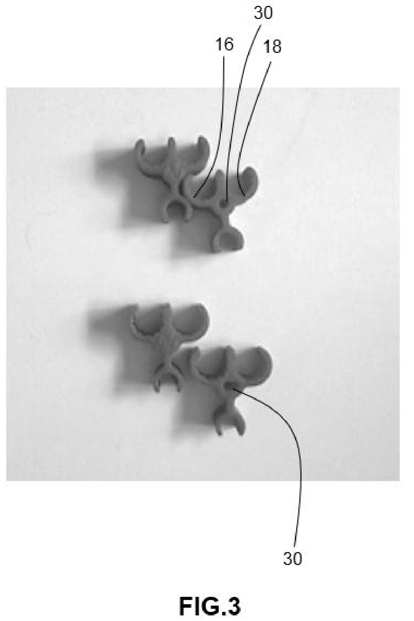

Comme le montre la [Fig.3], à cette différenciation par les couleurs, on peut ajouter, ou prévoir en variante, une différenciation par le biais d'une empreinte 30 de forme spécifique, ménagée dans la matière du clip 10, comme par exemple un cercle en creux à la base de l'oméga de la paire de gorges 16, 18, sur au moins une face du clip 10, pour les clips adaptés aux sections de câble de 1,5 mm² (représentés dans la partie supérieure de la [Fig.3]) et deux cercles en creux au même endroit pour les clips adaptés aux sections de câble de 2,5 mm² (représentés dans la partie inférieure de la [Fig.3]).

La forme circulaire n'est qu'un exemple non limitatif, toute autre forme d'empreinte convenant aussi bien. En variante, à la place d'une empreinte, on peut prévoir un bossage, ou encore une inscription imprimée, gravée ou en relief.

Contrairement à la différenciation par les couleurs, ce second mode de différenciation permet par exemple aux personnes atteintes de daltonisme de distinguer aisément les clips 10, sans aide extérieure.

Comme mentionné plus haut, le clip 10 conforme à l'invention est adapté à se clipser sur un support, par l'intermédiaire de sa gorge 19 en C ou de l'une ou l'autre gorge de la paire de gorges 16, 18 en oméga. Ce support peut prendre toute forme de dimensions adaptées à la réception de ces gorges, par clipsage du clip 10 sur le support. Ainsi, à titre d'exemple non limitatif, le support peut être un simple morceau de câble électrique ou de tuyau, ou encore un porte-clef spécifique.

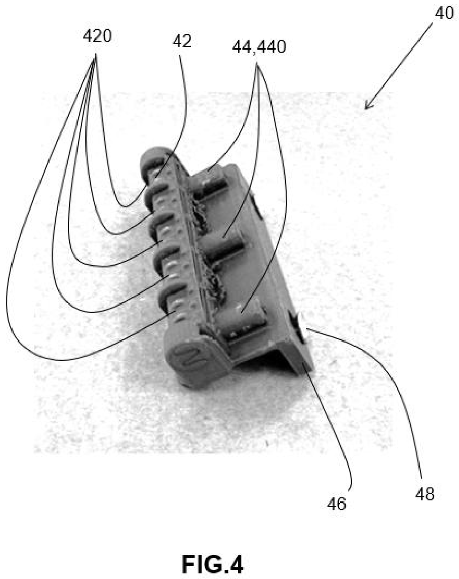

La [Fig.4] représente un support particulier, qui est un support 40 de clip spécialement adapté à la fixation d'au moins un clip 10 tel que décrit ci-dessus par l'intermédiaire de sa gorge 19 en C.

Comme le montre la [Fig.4], dans le mode particulier de réalisation illustré, le support 40 de clip comporte au moins un emplacement de fixation sur lequel la gorge 19 en C d'un clip 10 peut venir se clipser.

Ainsi, dans cet exemple non limitatif de réalisation, le support 40 de clip comporte sur une première face une barrette 42 cylindrique qui présente une première pluralité d'emplacements 420 de fixation de la gorge 19 en C d'un clip 10 (cinq emplacements 420 dans l'exemple illustré) et, sur une seconde face opposée à la première face, une pluralité de tiges 44 cylindriques dont les axes sont perpendiculaires à l'axe de la barrette 42, ces tiges 44 constituant une seconde pluralité d'emplacements 440 de fixation de la gorge 19 en C d'un clip 10 (trois emplacements 440 dans l'exemple illustré).

Dans le mode particulier de réalisation illustré, le support 40 de clip comporte en outre une platine 46 équipée de vis 48 de fixation, adaptée à la fixation du support 40 de clip sur un autre élément. Dans l'exemple non limitatif illustré, la platine 46 présente une section en L, la ou les vis 48 de fixation étant logées dans des alésages prévus sur une des branches du L et les cylindres de la pluralité de tiges 44 cylindriques étant solidaires, sur toute leur longueur, de l'autre branche du L.

L'autre élément sur lequel le support 40 de clip est adapté à être fixé peut être par exemple un support de touret.

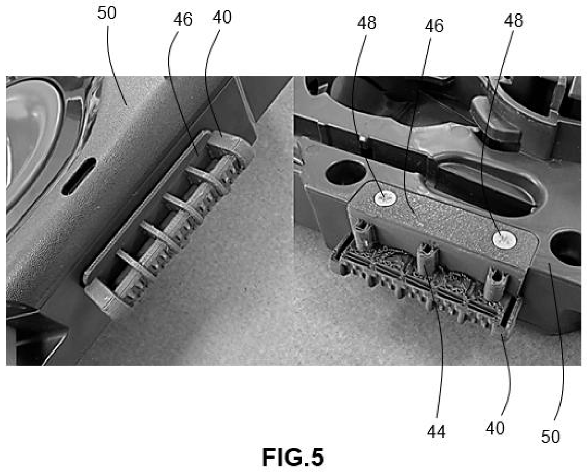

La [Fig.5] montre le support 40 de clip monté sur un support 50 de touret du type Mobiway (marque déposée) MOB, au niveau d'un emplacement latéral, indifféremment à gauche ou à droite, du support 50 de touret. La vue de gauche de la [Fig.5] montre la face avant et la vue de droite montre la face arrière du support 40 de clip et du support 50 de touret.

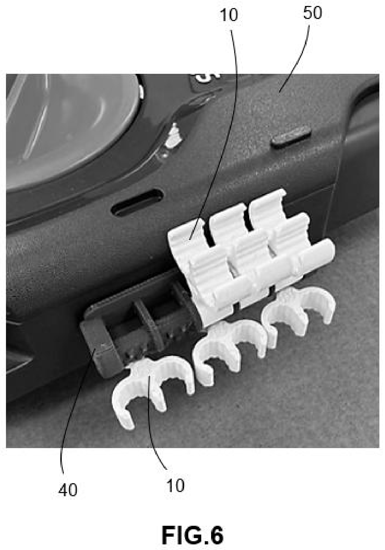

La [Fig.6] montre le support 40 de clip monté sur le support 50 de touret, avec trois clips 10 clipsés sur la barrette 42 et trois autres clips 10 clipsés sur les tiges 44.

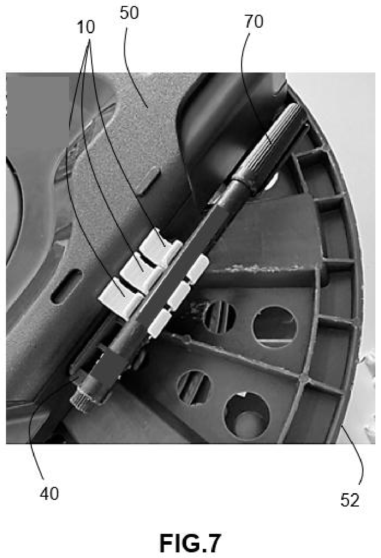

La [Fig.7] montre le support 40 de clip monté sur le support 50 de touret, avec un marqueur 70 clipsé sur l'une des gorges de la paire de gorges 16, 18 en oméga de trois clips 10, les clips 10 étant eux-mêmes clipsés par leur gorge en C sur la barrette 42 du support 40 de clip. Dans cet exemple, l'ensemble formé par le support 40 de clip, les clips 10 et le marqueur 70 présente un encombrement inférieur au diamètre du flasque 52 du touret, de sorte que la capacité du touret à rouler avec tous ces équipements n'est aucunement entravée.

## Revendications

1. Clip (10) de maintien multifonction, **caractérisé en ce qu'**il comporte :
une paire de gorges (16, 18) adaptée à retenir deux spires (12, 14) adjacentes d'un même élément enroulable ou à maintenir un ou deux objets au moins partiellement cylindriques, la section transversale de ladite paire de gorges (16, 18) formant un oméga dont la branche centrale est commune aux deux gorges de ladite paire de gorges (16, 18) ; et
une gorge (19) en C dont l'ouverture est à l'opposé de l'ouverture de ladite paire de gorges (16, 18), les gorges de ladite paire de gorges (16, 18) et ladite gorge (19) en C étant adaptées à se clipser sur un support et ladite gorge (19) en C étant en outre adaptée à s'emboîter de façon coaxiale dans une gorge de ladite paire de gorges (16, 18) d'un autre clip (10) identique.

2. Clip (10) selon la revendication 1, **caractérisé en ce que** la surface interne des deux gorges de ladite paire de gorges (16, 18) est dotée d'ondulations.

3. Clip (10) selon la revendication 1 ou 2, **caractérisé en ce qu'**il est réalisé dans une matière polymérique.

4. Clip (10) selon la revendication précédente, **caractérisé en ce que** ladite matière polymérique est biosourcée.

5. Clip (10) selon la revendication 3 ou 4, **caractérisé en ce que** ladite matière polymérique est biodégradable.

6. Clip (10) selon l'une quelconque des revendications précédentes, **caractérisé en ce qu'**il comprend une empreinte de forme spécifique ménagée dans la matière dudit clip (10).

7. Support (40) de clip, **caractérisé en ce qu'**il est adapté à la fixation d'au moins un clip (10) selon l'une quelconque des revendications précédentes, par clipsage de ladite gorge (19) en C.

8. Support (40) de clip selon la revendication précédente, **caractérisé en ce qu'**il comporte au moins un emplacement (420, 440) de fixation de ladite gorge (19) en C.

9. Support (40) de clip selon la revendication précédente, **caractérisé en ce qu'**il comporte, sur une première face, une barrette (42) cylindrique présentant une première pluralité d'emplacements (420) de fixation de ladite gorge (19) en C et, sur une seconde face opposée à la première face, une pluralité de tiges (44) cylindriques d'axes perpendiculaires à l'axe de ladite barrette (42) et constituant une seconde pluralité d'emplacements (440) de fixation de ladite gorge (19) en C.

10. Support (40) de clip selon l'une quelconque des revendications 7 à 9, **caractérisé en ce qu'**il comporte une platine (46) équipée de vis (48) de fixation, adaptée à la fixation dudit support (40) de clip sur un support (50) de touret.
